# EUROPÄISCHE PATENTSCHRIFT

(11) **EP 2 655 162 B1**
(45) Veröffentlichungstag und Bekanntmachung des Hinweises auf die Patenterteilung: **31.12.2014**
(21) Anmeldenummer: 12703843.8
(22) Anmeldetag: 16.02.2012
(51) Int. Cl.: B62D 3/00, F16H 57/02, B62D 3/12, F16H 57/027

(54) **VORRICHTUNG ZUM FREIGEBEN EINER ÖFFNUNG IN EINEM GEHÄUSETEIL EINES LENKGETRIEBES**
DEVICE FOR CLEARING AN OPENING IN A HOUSING PORTION OF A STEERING GEAR
DISPOSITIF POUR LIBÉRER UNE OUVERTURE DANS UNE PARTIE DE CARTER D'UN LEVIER DE DIRECTION

(30) Priorität: 28.03.2011 DE 102011001591
(43) Veröffentlichungstag der Anmeldung: 30.10.2013
(73) Patentinhaber: ZF-Lenksysteme GmbH, 73527 Schwäbisch Gmünd (DE)
(72) Erfinder: FRÖHLICH, Stefan, 73568 Zimmerbach (DE)
(86) Internationale Anmeldenummer: PCT/EP2012/052666
(87) Internationale Veröffentlichungsnummer: WO 2012/130525

(56) Entgegenhaltungen:
- DE-A1-102006 006 679
- DE-A1-102007 015 327
- JP-A- 63 101 180

## Beschreibung

Die Erfindung betrifft eine Vorrichtung zum Freigeben wenigstens einer Öffnung in einem Gehäuseteil eines Lenkgetriebes bei einer Fahrzeuglenkung nach der im Oberbegriff von Anspruch 1 näher definierten Art.

Eine Vorrichtung in dieser Ausgestaltung ist aus der DE 10 2006 006 679 A1 bekannt. Lenkgetriebe für Kraftfahrzeuge sind im Allgemeinen im Bereich der Verbindung einer Zahnstange mit Spurstangen mittels Faltenbälgen gegen die Umgebung abgedichtet.

Ein Problem dabei besteht darin, dass beispielsweise durch Tierbisse, Steinschläge, Werkzeuge oder andere negative Einflüsse Faltenbälge beschädigt werden können, wodurch die gesamte Lenkung gegen die Umgebung nicht mehr abgedichtet ist. Dies bedeutet, es kann Feuchtigkeit und Wasser in das Lenkgetriebe eintreten. Wenn die beschädigte Stelle sich nicht an der tiefsten Stelle des Lenkgetriebes befindet, kann das eintretende Wasser nicht von selbst abfließen, sondern sammelt sich im Inneren des Lenkgehäuses an. Eingedrungenes Wasser ist jedoch für die Wirkelemente des Lenkgetriebes schädlich und kann sogar zu Funktionsstörungen führen.

In der DE 10 2006 006 679 A1 ist deshalb bereits vorgeschlagen, an der tiefsten Stelle an dem Gehäuse des Lenkgetriebes eine Vorrichtung vorzusehen, die mit einem Verschlusselement und einem Wirkelement versehen ist, welches, wenn es mit einer Flüssigkeit, z. B. Wasser, in Kontakt kommt, wenigstens eine seiner Eigenschaften derart ändert, dass im Zusammenwirken des Wirkelementes mit dem Verschlusselement das Verschlusselement eine Öffnung freigibt, durch die die Flüssigkeit, nämlich Wasser, aus dem Inneren des Lenkgehäuses abfließen kann.

Für die Änderung der Eigenschaften des Wirkelementes, durch die die wenigstens eine Öffnung freigegeben wird, ist beispielsweise vorgeschlagen worden, dass das Wirkelement sein Volumen vergrößert, wodurch es das Verschlusselement aus der die vorher verschlossene Öffnung drückt.

Als weitere Lösung ist vorgeschlagen worden, dass das Wirkelement das Verschlusselement selbst zerstört oder das Wirkelement sich selbst auflöst. Auch in diesen beiden Fällen wird die wenigstens eine Öffnung freigegeben.

Des Weiteren offenbart Dokument DE 102 007 015 327 A1 sämtliche Sehrmole des Präambel des Anspruchs 1.

Es hat sich jedoch herausgestellt, dass das Wirkelement, insbesondere wenn es sich um ein wasserlösliches Element handelt, auch bei extremer Luftfeuchtigkeit, wie sie z. B. bei Fahrzeugtests vorkommen kann, reagieren kann, wodurch es dann zu einem unbeabsichtigten Öffnen des Ventils kommen kann.

Der vorliegenden Erfindung liegt daher die Aufgabe zugrunde die eingangs erwähnte Vorrichtung derart zu verbessern, dass sie nur bei einem Eintritt von Wasser, nicht jedoch auf Luftfeuchtigkeit reagiert.

Erfindungsgemäß wird diese Aufgabe durch die im gekennzeichneten Teil von Anspruch 1 genannten Merkmale gelöst.

Das Abdeckteil, das das Verschlusselement und damit auch das wasserempfindliche Wirkelement abdeckt, stellt sicher, dass keine Feuchtigkeit zu dem Verschlusselement und dem Wirkelement gelangt. Erst wenn Wasser in das Lenkgetriebe eingedrungen ist, gibt das Abdeckteil durch den oder die Auftriebskörper den Zugang zu dem wasserempfindlichen Wirkelement frei und erst dann treten die eingangs erwähnten Eigenschaften des Wirkelementes auf, durch die das Verschlusselement entsprechend die Öffnung freigibt.

Für die konstruktive Ausgestaltung des Abdeckteiles sind verschiedene Lösungen möglich. Wesentlich ist lediglich, dass der Zutritt von Luftfeuchtigkeit zu dem Wirkelement sicher verhindert wird und das Abdeckteil den Zutritt zu dem Wirkelement erst bei einem Auftreten von Wasser freigibt.

Das Abdeckteil kann z. B. als Membran ausgebildet sein.

Vorteilhafte Weiterbildungen und Ausgestaltungen sind nachfolgend anhand der Zeichnung prinzipmäßig beschrieben.

Es zeigt:
Figur 1: eine vereinfachte schematische Darstellung einer Fahrzeuglenkung.
Figur 2: die erfindungsgemäße Vorrichtung mit dem Abdeckteil im Schnitt in geschlossener Stellung.
Figur 3: die erfindungsgemäße Vorrichtung mit dem Abdeckteil im Schnitt in Offenstellung.

Fahrzeuglenkungen der vorstehend beschriebenen Art und Vorrichtungen zum Freigeben einer Öffnung in einem Gehäuseteil des Lenkgetriebes sind allgemein bekannt weshalb nachfolgend nur auf die für die Erfindung wesentlichen Teile näher eingegangen wird. Beispielsweise wird hierzu auf die eingangs bereits erwähnte DE 10 2006 006 679 A1 verwiesen. Die erfindungsgemäße Lösung mit einem Abdeckteil lässt sich dabei für alle darin genannten Ausführungsbeispiele grundsätzlich verwenden.

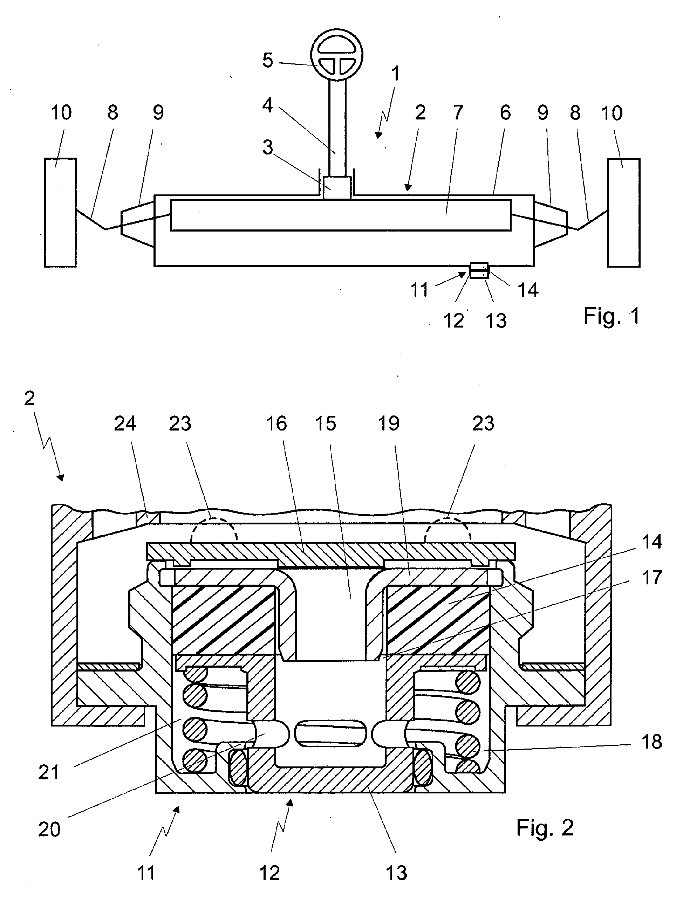

Die in der Figur 1 sehr vereinfacht dargestellte Fahrzeuglenkung 1 weist ein Lenkgetriebe 2 auf, auf dessen Eingangsseite sich ein Ritzel 3, eine Lenksäule 4 und ein Lenkrad 5 befinden.

Auf der Ausgangsseite des Lenkgetriebes 2 ist eine in einem Gehäuseteil 6 des Lenkgetriebes 2 in Längsrichtung verschiebbare Zahnstange 7 angeordnet. Als Gehäuseteil 6 ist dabei das gesamte Gehäuse, jedoch gegebenenfalls auch ein einzelnes Wirkelement des Gehäuses, wie z. B. ein Gehäusedeckel oder ein ähnliches Teil, anzusehen.

Die Zahnstange 7 ist an ihren beiden Enden jeweils mit einer Spurstange 8 verbunden. Der Verbindungsbereich zwischen der Zahnstange 7 und den Spurstangen 8 ist jeweils durch einen Faltenbalg 9 abgedichtet. An den Spurstangen 8 sind in bekannter Weise Räder 10 des Kraftfahrzeuges angebracht.

Um bei einem Eintreten von Flüssigkeit, insbesondere Wasser, in das Lenkgetriebe 2 dieses wieder ableiten zu können, ist an dem Gehäuseteil 6 des Lenkgetriebes 2 vorzugsweise an der tiefsten Stelle eine Vorrichtung 11 zum Freigeben wenigstens einer Öffnung 12 vorgesehen. Im Normalbetrieb ist die Öffnung 12 mit einem Verschlusselement 13 verschlossen, so dass keine Flüssigkeit von außen in das Lenkgetriebe 2 eindringen kann.

In der Vorrichtung 11 ist ein Wirkelement 14 vorgesehen, das bei einem Auftreffen von Wasser auf das Wirkelement 14 seine Eigenschaften ändert. Bei dem dargestellten Ausführungsbeispiel löst sich das Wirkelement 14 auf. Die Vorrichtung 11 ist mit einer zentralen Einlauföffnung 15 versehen. Über der Einlauföffnung 15 für die Ableitung von Wasser aus dem Inneren des Lenkgetriebes 2 ist ein Abdeckteil 16 angeordnet. Durch das Abdeckteil 16 ist die Einlauföffnung 15 gegenüber dem Inneren des Lenkgetriebes 2 abgedeckt.

Im Inneren der Vorrichtung 11 befindet sich das Verschlusselement 13, durch das verhindert wird, dass Flüssigkeit von außen in das Lenkgetriebe 2 eindringen kann.

Das Verschlusselement 13 ist durch eine Feder 18 derart vorgespannt, dass es gegen das Wirkelement 14 angepresst ist.

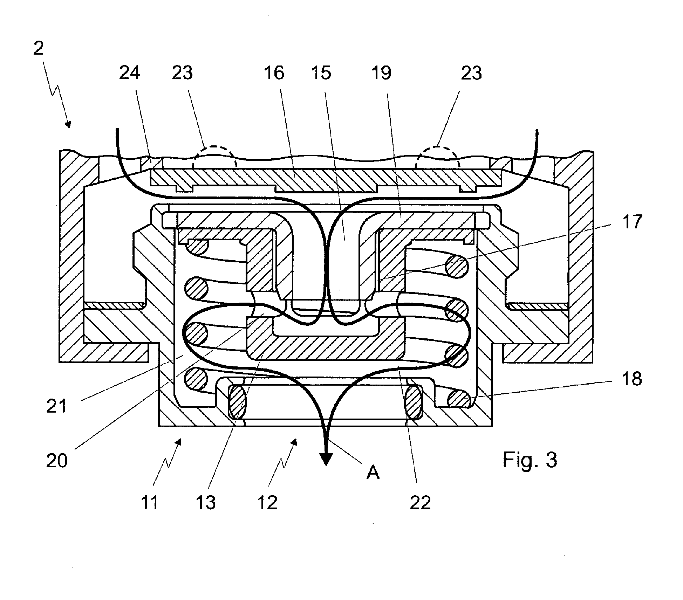

Aus den Figuren 2 und 3 ist die Funktionsweise der Vorrichtung 11 ersichtlich. Aufgrund der Ausbildung des Abdeckteiles 16 als Auftriebskörper hebt es bei einem in das Innere des Lenkgetriebes 2 eingedrungenen Wasser von seiner dichtenden Funktion ab. Im ersten Schritt kann damit das Wasser über die Einlassöffnung 15 in die Vorrichtung 11 einlaufen. Über einen Ringspalt 17 zwischen einem Teil des Gehäuses der Vorrichtung und dem Verschlusselement 13 kommt das eingedrungene Wasser mit dem Wirkelement 14 in Kontakt und löst sich damit auf. Das Wirkelement kann z. B. eine Harnstofftablette sein, die sich bei Kontakt mit Wasser auflöst.

Sobald sich das Wirkelement aufgelöst hat, drückt eine Feder 18 das Verschlusselement 13 nach oben in den durch das aufgelöste Wirkelement frei gewordenen Raum bis es an der Unterseite der oberen Stirnplatte 19 der Vorrichtung 11 anliegt.

Wie aus der Figur 3 ersichtlich ist, kann damit das eingedrungene Wasser gemäß Pfeilrichtung A über radiale Umfangsbohrungen 20 in dem Verschlusselement 13 in den Federraum 21 der Feder 18 eindringen und anschließend über einen Spalt 22, der aufgrund der angehobenen Lage des Verschlusselementes 13 zwischen dem Verschlusselement 13 und einem ringförmigen Gehäuseteil der Vorrichtung entsteht, über die Öffnung 12 auslaufen.

Selbstverständlich ist die zentrale Lage der Einlauföffnung 15 nur beispielsweise anzusehen. Gleiches gilt für den Durchlauf des Wassers durch die Vorrichtung und deren Austritt aus der Öffnung 12.

So ist es selbstverständlich auch möglich, dass anstelle der zentralen Einlauföffnung 15 ein oder mehrere Öffnungen bzw. Bohrungen in der Stirnplatte 19 über dem Wirkelement 14 angeordnet sind. Das Abdeckteil 16 deckt im Normalbetrieb die Stirnplatte 19 ab. Bei einem Abheben der Abdeckscheibe 16 kann dann eingedrungenes Wasser direkt über die nunmehr freiliegenden Bohrungen in der Stirnplatte 19 in den Raum, in welchem sich das Wirkelement 14 befindet, einfließen.

Anstelle einer Ausgestaltung der Abdeckscheibe 16 als Auftriebskörper, deren spezifisches Gewicht somit leichter ist als das von Wasser, ist es selbstverständlich auch möglich, dass die Abdeckscheibe 16 mit ein oder mehreren Auftriebskörpern 23 versehen ist, wie dies beispielsweise dargestellt ist.

Aus der Figur 3 ist weiterhin auch ersichtlich, dass sich das abgehobene Abdeckteil 16 an einem Gehäusewandteil 24 des Lenkgetriebes 2 mit einer oberen Stirnseite anliegt. Sobald das in das Lenkgetriebe eingedrungene Wasser vollständig abgelaufen ist, kann das Abdeckteil 16 somit wieder auf die Vorrichtung 11 zurückfallen und damit die Einlauföffnung 15 wieder abdecken.

Alternativ dazu ist es jedoch auch möglich, mit einer geeigneten Einrichtung dafür zu sorgen, dass das Abdeckteil 16 nach einem einmaligen Abheben in der abgehobenen Position verbleibt, womit die Einlauföffnung 15 ständig offen bleibt.

Von Vorteil ist es, wenn eine Sensoreinrichtung vorgesehen ist, durch die das Eindringen von Wasser in das Lenkgetriebe und das Abheben des Abdeckteiles 16 gemeldet wird.

Anstelle einer Ausgestaltung des Abdeckteiles 16 als flache Scheibe kann sie auch mit einem zentralen Dorn versehen sein, der in die zentrale Bohrung (Einlauföffnung 15) der Vorrichtung 11 eingesteckt ist, womit das Abdeckteil 16 fest mit der Vorrichtung verbunden ist. In diesem Fall sind mehrere Eintrittsöffnungen in der Stirnplatte 19 über dem Wirkelement 14 vorgesehen, wie dies vorstehend bereits vorgeschlagen ist. Bei einer entsprechend elastischen Ausgestaltung des Abdeckelementes, gegebenenfalls verstärkt durch Auftriebskörper 23 hebt sich dann das Abdeckteil 16 nach Art eines umgekehrten bzw. "umgeschnappten" Regenschirmes von der Stirnplatte 19 ab und über den entstehenden Ringspalt kann von außen her Wasser eindringen. Dabei ist lediglich dafür zu sorgen, dass eine entsprechende Elastizität oder auch eine gelenkige Ausgestaltung des Abdeckteiles 16 radial außerhalb des Kernes des Abdeckteiles 16 vorhanden ist, damit das Abdeckteil 16 an seinem Umfang abheben kann.

### Bezugszeichenliste

- 1: Fahrzeuglenkung
- 2: Lenkgetriebe
- 3: Ritzel
- 4: Lenksäule
- 5: Lenkrad
- 6: Gehäuseteil
- 7: Zahnstange
- 8: Spurstange
- 9: Faltenbalg
- 10: Räder
- 11: Vorrichtung
- 12: Öffnung
- 13: Verschlusselement
- 14: Wirkelement
- 15: Einlauföffnung
- 16: Abdeckteil
- 17: Ringspalt
- 18: Feder
- 19: Stirnplatte
- 20: Umfangsbohrung
- 21: Federraum
- 22: Spalt
- 23: Auftriebskörper
- 24: Gehäusewandteil

## Patentansprüche

1. Vorrichtung zum Freigeben wenigstens einer Öffnung in einem Gehäuseteil eines Lenkgetriebes bei einer Fahrzeuglenkung, mit einem die Öffnung verschließenden Verschlusselement (13) und mit einem Wirkelement (14), welches, wenn es mit einer Flüssigkeit in Kontakt kommt, wenigstens eine seiner Eigenschaften derart ändert, dass nach einem Zusammenwirken des Wirkelements (14) mit dem Verschlusselement (13), die Öffnung (12) durch das Verschlusselement (13) freigebbar ist, **dadurch gekennzeichnet, dass** das Verschlusselement (13) wenigstens teilweise durch ein Abdeckteil (16) abgedeckt ist, das als Auftriebskörper ausgebildet oder mit ein oder mehreren Auftriebskörpern (20) versehen ist, wobei bei einem Auftreffen der Flüssigkeit auf das Abdeckteil (16) das Abdeckteil die Öffnung (12) endgültig freigibt.

2. Vorrichtung nach Anspruch 1, **dadurch gekennzeichnet, dass** das Abdeckteil (16) wenigstens teilweise scheibenförmig ausgebildet ist.

3. Vorrichtung nach einem der Ansprüche 1 oder 2, **dadurch gekennzeichnet, dass** mehrere am Umfang des Abdeckteiles (16) angeordnete Auftriebskörper (23) vorgesehen sind.

4. Vorrichtung nach einem der Ansprüche 1 bis 4, **dadurch gekennzeichnet, dass** das Abdeckteil (16) als Membran ausgebildet ist.

5. Vorrichtung nach einem der Ansprüche 1 bis 4, **dadurch gekennzeichnet, dass** das Abdeckteil (16) nach Ablauf der Flüssigkeit die Einlauföffnung (15) wieder verschließt.

6. Vorrichtung nach einem der Ansprüche 1 bis 4, **dadurch gekennzeichnet, dass** das Abdeckteil (16) derart ausgebildet ist, dass es nach einer Aktivierung in Offenstellung verbleibt.

## Claims

1. Device for clearing at least one opening in a housing portion of a steering gear in a vehicle steering system, having a closure element (13) which closes the opening, and having an active element (14) which, if it comes into contact with a liquid, changes at least one of its properties in such a way that after interaction of the active element (14) with the closure element (13), the opening (12) can be cleared by the closure element (13), **characterized in that** the closure element (13) is at least partially covered by a cover part (16) which is embodied as a float body or is provided with one or more float bodies (20), wherein when the liquid impacts against the cover part (16) the cover part definitively clears the opening (12).

2. Device according to Claim 1, **characterized in that** the cover part (16) is embodied at least partially in the form of a disc.

3. Device according to one of Claims 1 or 2, **characterized in that** a plurality of float bodies (23) which are arranged on the circumference of the cover part (16) are provided.

4. Device according to one of Claims 1 to 4, **characterized in that** the cover part (16) is embodied as a diaphragm.

5. Device according to one of Claims 1 to 4, **characterized in that** after the liquid runs out the cover part (16) closes the inlet opening (15) again.

6. Device according to one of Claims 1 to 4, **characterized in that** the cover part (16) is embodied in such a way that it remains in the open position after activation.

## Revendications

1. Dispositif pour libérer au moins une ouverture dans une partie de carter d'un levier de direction dans une direction de véhicule, comprenant un élément de fermeture (13) fermant l'ouverture et un élément fonctionnel (14) qui, lorsqu'il vient en contact avec un liquide, modifie au moins l'une de ses propriétés de telle sorte qu'après coopération de l'élément fonctionnel (14) avec l'élément de fermeture (13), l'ouverture (12) puisse être libérée par l'élément de fermeture (13), **caractérisé en ce que** l'élément de fermeture (13) est recouvert au moins en partie par une partie de recouvrement (16) qui est réalisée en tant que corps flottant ou qui est pourvue d'un ou de plusieurs corps flottants (20), la partie de recouvrement libérant finalement l'ouverture (12) lors du contact du liquide avec la partie de recouvrement (16).

2. Dispositif selon la revendication 1, **caractérisé en ce que** la partie de recouvrement (16) est réalisée au moins en partie en forme de disque.

3. Dispositif selon l'une quelconque des revendications 1 ou 2, **caractérisé en ce que** plusieurs corps flottants (23) sont disposés à la périphérie de la partie de recouvrement (16).

4. Dispositif selon l'une quelconque des revendications 1 à 4, **caractérisé en ce que** la partie de recouvrement (16) est réalisée sous forme de membrane.

5. Dispositif selon l'une quelconque des revendications 1 à 4, **caractérisé en ce que** la partie de recouvrement (16) referme à nouveau l'ouverture d'entrée (15) après l'écoulement du liquide.

6. Dispositif selon l'une quelconque des revendications 1 à 4, **caractérisé en ce que** la partie de recouvrement (16) est réalisée de telle sorte qu'elle reste dans la position ouverte après une activation.
